# EUROPÄISCHE PATENTSCHRIFT

(11) **EP 0 354 306 B1**
(45) Veröffentlichungstag und Bekanntmachung des Hinweises auf die Patenterteilung: **14.04.1993**
(21) Anmeldenummer: 89109002.9
(22) Anmeldetag: 19.05.1989
(51) Int. Cl.: B23Q 7/04

(54) **Vorrichtung zum Bewegen des Greifers eines Einlegers**
Device for moving the gripper of an inserting device
Dispositif pour déplacer la pince d'un chargeur

(30) Priorität: 12.08.1988 DE 8810248 U
(43) Veröffentlichungstag der Anmeldung: 14.02.1990
(73) Patentinhaber: Weiss, Dieter, D-74722 Buchen (DE)
(72) Erfinder: Weiss, Dieter, D-74722 Buchen (DE)
(74) Vertreter: Clemens, Gerhard, Dr.-Ing.

(56) Entgegenhaltungen:
- DE-A- 2 742 103
- DE-A- 3 318 398
- FR-A- 2 547 230
- US-A- 2 187 827
- US-A- 3 788 377

## Beschreibung

Die Erfindung betrifft eine Vorrichtung zum Bewegen des Greifers eines Einlegers für Werkstücke in einer Führungsrichtung und in einer Querrichtung senkrecht dazu und zurück
mit einem Anschlagelement für den Greifer,
mit einem in Führungsrichtung und zurück auf stationären geraden Führungsschienen verschieblichen Schlitten,
mit einer auf dem Schlitten angeordneten Geradführung für das Anschlagelement, in der dieses in Querrichtung und zurück verschieblich ist,
mit einer von einem Motor rotierend antreibbaren, am Gehäuse gelagerten, mit zwei Steuerkurven ausgestatteten Kurventrommel,
mit einem ersten Hebelgetriebe, das mit der ersten Steuerkurve zusammenwirkt und den Schlitten entlang der Führungsschienen verschiebt, und
mit einem zweiten Hebelgetriebe, das mit der zweiten Steuerkurve zusammenwirkt und das Anschlagelement entlang der Geradführung verschiebt.

Ein Einleger der in Frage stehenden Art dient unter anderem dazu, mit einem angesetzten Greifer vereinzelt zugeführte Werkstücke zu erfassen und in einer vorbestimmten Abgabeposition in einen Halter, eine Werkzeugmaschine oder dergleichen einzusetzen. Dazu führt beispielsweise der Greifer, ausgehend von einer Ausgangsstellung, in der er ein Werkstück aufnimmt, eine Bewegung in Führungsrichtung und in Querrichtung in eine Abgabestellung, in der er das Werkstück präzise in die Abgabeposition abgibt, aus. Anschließend führt der Greifer eine Bewegung in seine Ausgangsstellung zurück durch und kann dort wieder ein neues Werkstück aufnehmen.

Bei einer aus der DE-A- 27 42 103 bekannten Vorrichtung dieser Art wird der Schlitten in vertikaler Richtung auf Führungsschienen bewegt. Quer dazu in horizontaler Richtung ist am Schlitten längsverschieblich eine Tragstange angeordnet, an deren freiem Ende das Anschlagelement für den Greifer angeordnet ist. Die Tragstange wird hin- und hergeschoben über einen Hebel, der an seinem einen freien Ende schwenkbar am Gehäuse gelagert ist und mit seinem anderen freien Ende an die Tragstange gekuppelt ist. Zwischen diesen freien Enden stützt sich die Tragstange über eine Führungsrolle an einer Steuerkurve der Kurventrommel ab.

Bei Vorrichtungen dieser Art ist es besonders wichtig, daß der Greifer exakt die Abgabeposition anfährt. Deshalb sind Hebelübersetzungen, bei denen sich die durch Lagerlosen bedingten Fehler im Übersetzungsverhältnis multiplizieren, nachteilig. Außerdem sollen die Bewegungsabläufe bei Vorrichtungen der eingangs genannten Art möglichst schnell erfolgen.

Aufgabe der Erfindung ist es, eine Vorrichtung der eingangs genannten Art so auszubilden, daß die mit dem Schlitten bewegten Massen möglichst klein gehalten werden können, daß die mechanischen Elemente zur Führung in Führungsrichtung und in Querrichtung möglichst einfach ausgebildet werden können und daß auf möglichst einfache Weise das Anschlagelement exakt in seine Endstellungen, die der Bewegung in Führungsrichtung entsprechen, gebracht wird. Letzteres ist deshalb von Bedeutung, weil durch die eine Endstellung der Bewegung in Führungsrichtung die Position des Werkstückes über der Abgabeposition bestimmt wird, die zum Beispiel ein Loch sein kann, in das ein stiftartiges Werkstück eingesteckt werden soll.

Die Erfindung löst diese Aufgabe dadurch, daß das erste Hebelgetriebe eine achsparallel zur Führungsrichtung sich erstreckende und in ihrer Längsrichtung verschiebliche gerade Zahnstange aufweist, daß die Zahnstange antriebsseitig an die erste Steuerkurve gekuppelt ist, daß die Zahnstange abtriebsseitig eine Verzahnung aufweist, daß ein mit seiner Achse senkrecht zur Führungsrichtung drehbar gelagertes Zahnsegment vorgesehen ist, dessen Verzahnung mit der Verzahnung des Zahnstange kämmt, daß dieses Zahnsegment einen radial gerichteten Betätigungshebel aufweist, daß der Betätigungshebel bei einer vollen Umdrehung der Kurventrommel von einer ersten Endstellung parallel zur Zahnstange und in eine erste Richtung weisend in eine zweite Stellung parallel zur Zahnstange aber in die zweite Richtung weisend und auf dem gleichen Wege zurück schwenkend antreibbar ist und daß das freie Ende des Betätigungshebels an einen Schieber angelenkt ist, der am Schlitten in einer vorzugsweise mit der Querrichtung zusammenfallenden Schieberrichtung, die sich senkrecht zur Führungsrichtung und senkrecht zur Achse des Zahnsegmentes erstreckt, und zurück verschieblich geführt ist.

Vorzugsweise erstreckt sich die Führungsrichtung im wesentlichen horizontal und die Querrichtung im wesentlichen vertikal.

Das Zahnsegment mit dem Betätigungshebel führt den Schlitten, bezogen auf die Führungsrichtung, immer in der Totpunktlage des Betätigungshebels in die Endstellung. Damit sind die Endstellungen in Führungsrichtung sehr genau räumlich definiert, und zwar unabhängig von Toleranzen auf dem Kraftübertragungsweg bis zum Betätigungshebel. Der Schlitten kann, da er die langgestreckten Führungsschienen für die Bewegung in Führungsrichtung nicht trägt, ohne großen Aufwand präzise gelagert und massearm ausgestaltet werden.

Vorzugsweise ist die Kurventrommel achsparallel zur Führungsrichtung gelagert und die erste Steuerkurve ist in die Mantelfläche der Kurventrommel eingearbetet. Durch die Orientierung der Kurventrommel achsparallel zur Führungsrichtung wird eine direkte und damit einfachere Übertragung der Bewegung in Führungsrichtung möglich.

Auch für die Durchführung der Bewegung in Querrichtung sind Vorteile im Sinne der eingangs angegebenen Aufgabenstellung möglich dadurch, daß für den Schlitten zwei zur Führungsrichtung achsparallele Führungsschienen vorgesehen sind, von denen die eine Führungsschiene drehbar gelagert ist, daß die drehbar gelagerte Führungsschiene über einen Hebel an die zweite Steuerkurve gekuppelt ist und bei einem vollen Umlauf der Kurventrommel zu einer Schwenkbewegung um ihre Längsachse um einen Winkelbereich, kleiner als 180^{o} und zurück angetrieben wird, daß auf die drehbar gelagerte Führungsschiene längsverschieblich aber drehsteif ein radial gerichteter Mitnehmerarm gesteckt ist, der mit seinem freien Ende an das Anschlagelement gekuppelt ist und dieses bei Drehbewegung der drehbar gelagerten Führungsschiene in Querrichtung und zurück verschiebt.

Die zweite Führungsschiene erfüllt dabei zwei Funktionen, nämlich die der Führungsfunktion in Führungsrichtung und eine Antriebsfunktion für die Querrichtung. Im Gegensatz dazu sind bei der bekannten Vorrichtung die Führungsschienen für den Schlitten nur zur Führung vorgesehen und zum Antrieb in Querrichtung zusätzliche besondere Kraftübertragungselemente vorgesehen.

In vielen Fällen ist es wünschenswert, daß die Bewegung des Greifers und damit des Anschlagelementes in der einen Querrichtung abgefedert wird für den Fall, daß das Werkstück oder der Greifer beim Einsetzen des Werkstückes in seine Endposition auf Widerstand, zum Beispiel einen Anschlag, trifft. Eine solche Abfederung ist Gegenstand der Ansprüche 5 und 6.

Das Anschlagelement muß zum Anschlagen des Greifers von außen zugänglich sein. Im übrigen sollte die Vorrichtung, schon um Verletzungen und Verschmutzungen zu vermeiden, in einem möglichst abgeschlossenen Gehäuse untergebracht sein. Dem wird eine Weiterbildung gerecht, die Gegenstand der Ansprüche 7 und 8 ist.

Andere Weiterbildungen der Erfindung sind Gegenstand der übrigen Unteransprüche.

Die Erfindung wird nun anhand der beigefügten Zeichnung näher erläutert.

In der Zeichnung zeigt:
- Figur 1: ein erstes Ausführungsbeispiel der Vorrichtung im Querschnitt,
- Figur 2: den Teilschnitt II aus Figur 1,
- Figur 3: den Teilschnitt III aus Figur 1,
- Figur 4: die Ansicht gemäß dem Pfeil IV aus Figur 2,
- Figur 5: ein zweites Ausführungsbeispiel der Vorrichtung im Querschnitt,
- Figur 6: den Teilschnitt VI aus Figur 5,
- Figur 7: den Teilschnitt VII aus Figur 5 und
- Figur 8: den Teilschnitt VIII aus Figur 5.

In der Zeichnung ist mit 1 ein Gehäuse bezeichnet, das zur Befestigung an einem äußeren Lagerplatz eine Standplatte 57 aufweist. In dem Gehäuse ist ein elektrischer Antriebsmotor 2 untergebracht. Dieser Antriebsmotor 2 treibt über ein Zahnradgetriebe 3 eine Kurventrommel 4, die um die Achse 5 drehbar im Gehäuse gelagert ist. Die Kurventrommel 4 weist eine erste geschlossene Steuerkurve 6 auf, die in die Mantelfläche 7 der Kurventrommel 4 eingearbeitet ist.

Durch den Doppelpfeil 8 ist eine Führungsrichtung angezeigt. Parallel zu dieser Führungsrichtung erstreckt sich die Achse 5. Parallel zu dieser Führungsrichtung sind auch zwei Führungsschienen 10 und 11 gelagert, die eine Führung für einen innerhalb des Gehäuses untergebrachten Schlitten 12 bilden, so daß dieser in Führungsrichtung hin- und herbeweglich ist.

Mit 13 ist eine gerade Zahnstange bezeichnet, die in Längslagern 14, 15 längsverschieblich im Gehäuse gelagert ist. Die Achse 17 dieser Zahnstange 13 erstreckt sich in Führungsrichtung, ebenso wie ihre Längsverschieblichkeit. Am antreibenden Ende ist diese Zahnstange mit Hilfe eines Kupplungselementes 18 in die erste Steuerkurve 6 eingekuppelt, die bei jeder vollen Umdrehung der Steuerkurve eine Hin- und Herbewegung in Führungsrichtung gemäß Doppelpfeil 8 durchführt. Das freie Ende der Zahnstange ist mit einer Verzahnung 20 versehen, mit der die Verzahnung 21 eines Zahnsegmentes 22 kämmt.

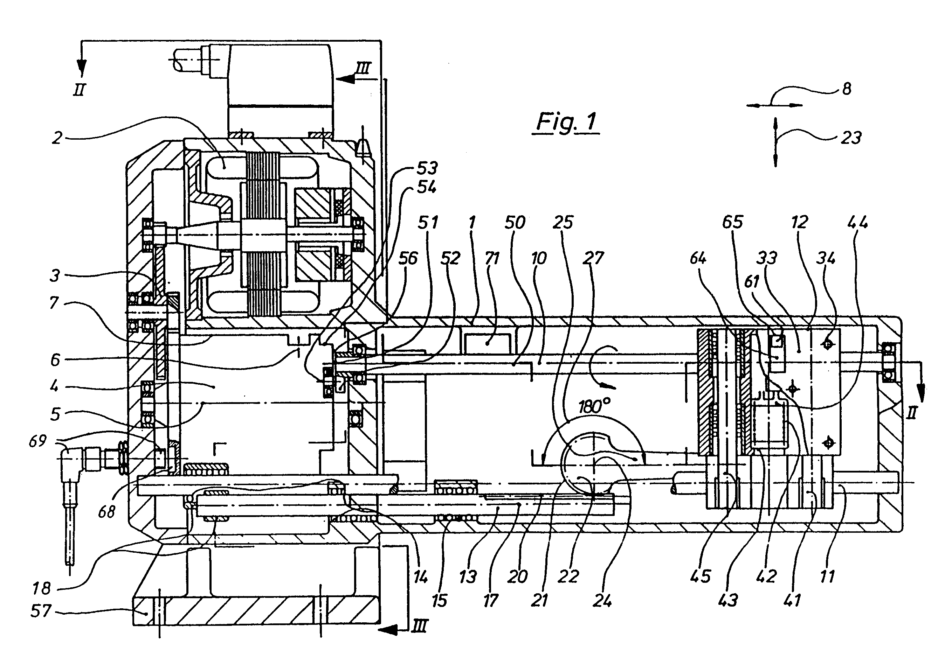

Durch den Doppelpfeil 23 ist eine Querrichtung angezeigt, die sich senkrecht zur Führungsrichtung erstreckt. Das Zahnsegment 22 ist um eine Achse 24 schwenkbar am Gehäuse 1 gelagert, die sich senkrecht zur Führungsrichtung und zur Querrichtung erstreckt. An dem Zahnsegment ist ein radial sich erstreckender Betätigungshebel 25 befestigt, der bei einer vollen Umdrehung der Kurventrommel 4, ausgehend von der in Figur 1 gezeichneten Endstellung, in der er in Führungsrichtung weist, gemäß Doppelpfeil 27 um 180^{o} schwenkt in die zweite Endstellung, in der er ebenfalls in Führungsrichtung aber entgegengesetzt weist.

Am Schlitten 12 ist ein Schieber 30 gelagert, der am Schlitten in Schlittenrichtung, die mit der Querrichtung gemäß Doppelpfeil 23 zusammenfällt, an einer Geradführung 31 verschieblich geführt ist. Das freie Ende 32 des Betätigungshebels 25 ist an diesem Schieber 30 angelenkt. Die Beweglichkeit des Schlittens erstreckt sich über die gesamte Bewegung des freien Endes 32. Die Folge dieser Kupplung ist, daß bei jeder vollen Umdrehung der Kurventrommel der Betätigungshebel von seiner einen Endstellung in die andere schwenkt und dabei den Schlitten 12 in Führungsrichtung hin und her verschiebt. Dabei ist bemerkenswert, daß die beiden Endstellungen der Hin- und Herbewegung des Schlittens den Totpunktlagen des Betätigungshebels mit Bezug auf die Beweglichkeit des Schlittens entspricht, so daß diese beiden Endstellungen sehr genau allein durch die Geometrie des Betätigungshebels und unabhängig von den eventuellen Lagerlosen im Bereich der Antriebsübertragung auf den Betätigungshebel abhängt.

An dem Schlitten 12 ist eine etwa rechteckige Anschlagplatte 33 gelagert, die sich in der durch die Querrichtung und die Führungsrichtung aufgespannten Parallelebene erstreckt. Diese Anschlagplatte 33 weist Bohrungen 34 oder andere Anschlagelemente auf, mit Hilfe derer ein nicht dargestellter Greifer dort fixiert werden kann.

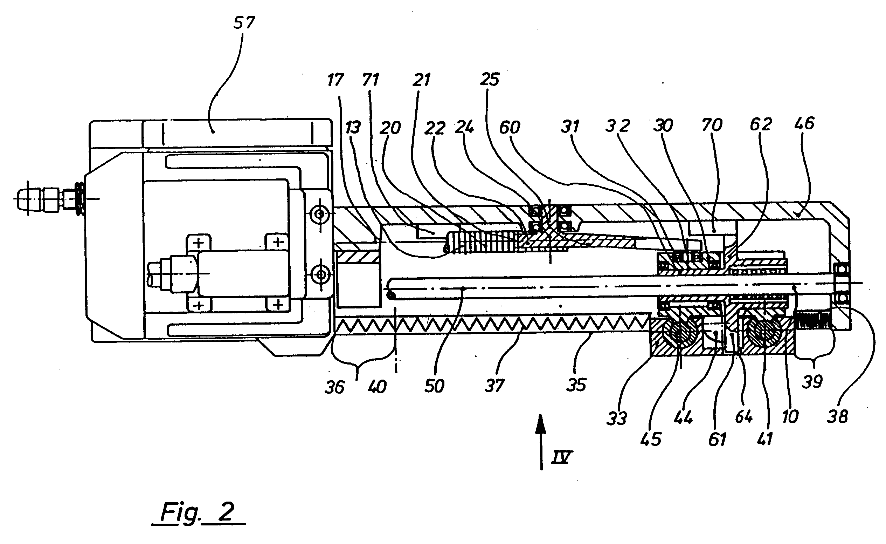

Der Schlitten 12 ragt mit seinen der Anschlagplatte 33 zugeordneten Stirnteilen wie aus Figur 2 ersichtlich aus einer dort vorgesehenen zur Anschlagplatte planparallelen Gehäusewand 35 eines Gehäuses 1 etwas heraus. In dieser Gehäusewand ist eine Aussparung 36 vorgesehen, die sich mit beiderseitiger Zugabe über die gesamte Bewegungsbahn des Schlittens erstreckt. Beidseitig vom Schlitten ist die Aussparung durch je einen Faltenbalg 37, 38 abgeschlossen, der, wie für den Faltenbalg 38 ersichtlich, auf die betreffende Zugabe 39 zusammendrückbar ist. Der andere Faltenbalg ist in der in Figur 1 und 2 gezeichneten Endstellung ausgezogen und in der anderen Endstellung auf die andere Zugabe 40 zusammengedrängt. Durch den Schlitten und die beiden Faltenbalge ist die Aussparung 36 verschlossen, jedenfalls so weit, daß unbeabsichtigtes Eingreifen in das Innere des Gehäuses dort nicht stattfinden kann.

Die Anschlagplatte 33 ist in Querrichtung auf zwei am Schlitten 12 befestigten Führungsschienen 41, 45 verschieblich, und zwar bezogen auf die Blickrichtung von Figur 1 nach oben gegen die Kraftwirkung einer als Druckfeder ausgebildeten Rückstellfeder 42, die sich auf einer Kante 43 der Anschlagplatte 33 einerseits und auf einem Anschlag 44 des Schlittens 12 andererseits abstützt.

Die Führungsschiene 10 ist um ihre Längsachse 50 drehbar gelagert. Am antriebsseitigen Ende 51 der Führungsschiene 10 ist ein radial sich erstreckender Hebel 52 befestigt, der an seinem freien Ende ein Kupplungsglied 53 aufweist, das in die zweite Steuerkurve 54 eingreift, die geschlossen ist und in die dem Schlitten zugekehrte Stirnseite 56 der Kurventrommel 4 eingelassen ist. Bei jeder vollen Umdrehung der Kurventrommel vollführt die Führungsschiene 10 eine Schwenkbewegung um ihre Längsachse 50, und zwar um einen Winkelbereich von 50^{o}.

Auf die Führungsschiene ist verdrehungssteif, aber auf der Führungsschiene längsverschieblich, ein Mitnehmer 60 gesteckt, der drehbar um die Achse 50 der Führungsschiene aber unverschieblich am Schlitten 12 gelagert ist. Der Mitnehmer 60 weist zwei radial diametral einander gegenübergerichtete Arme 61, 62 auf. Das freie Ende des einen Mitnehmerarms 61 greift in ein Langloch 64 der Anschlagplatte 33. Das Langloch 64 erstreckt sich in Querrichtung, so daß das freie Ende des Mitnehmerarms innerhalb des Langlochs in Querrichtung spielen kann. Das freie Ende des Mitnehmerarms liegt jedoch unter Druckwirkung der Druckfeder 42 am oberen Rand 65 des Langlochs an, solange keine äußeren Kräfte auf die Anschlagplatte wirken.

In der Bahn des zweiten Mitnehmerarms 62 ist innerhalb des Gehäuses 1 justierbar ein erster als Pneumatikventil ausgebildeter Endschalter 70 montiert und in der Bahn des Schlittens 12 ist innerhalb des Gehäuses justierbar ein zweiter als Pneumatikventil ausgebildeter Endschalter 71 montiert. Die beiden Endschalter dienen dazu, den Greifer zu betätigen. Es kann sich dabei zum Beispiel um elektrische Kontaktschalter, pneumatische oder hydraulische Schalter handeln, je nach Ausgestaltung des Greifers.

Mit 69 ist ein berührungsloser Fühler bezeichnet, der auf die Umlaufbahn eines Abfühlelementes 68 gerichtet ist, das an der einen Stirnseite der Kurventrommel 4 angeordnet ist. Der Fühler 69 erzeugt bei jedem vollen Umlauf der Kurventrommel ein Signal, immer dann, wenn ein voller Bewegungszyklus beendet ist, und löst die Abschaltung des Antriebsmotors 2 in Ausgangssellung der Anschlagplatte 33 aus, der durch eine andere, nicht dargestellte Schaltung für den nächsten Zyklus wieder eingeschaltet wird.

Bei Betrieb vollführt die Anschlagplatte und damit ein dort angeschlagener, nicht dargestellter Greifer, ausgehend von einer Ausgangsstellung eine Hinbewegung in der vorzugsweise horizontalen Führungsrichtung gemäß Doppelpfeil 8 und in der vorzugsweise vertikalen Querrichtung, vorzugsweise abwärts, gemäß Doppelpfeil 23. Die Anschlagplatte erreicht so eine Stellung, in der ein von dem Greifer erfaßtes Werkstück sich exakt in eine Abgabeposition bewegt. Dort wird das Werkstück abgegeben und dann vollführt die Anschlagplatte eine Zurückbewegung in entgegengesetzter Richtung zur Ausgangsstellung zurück.

Bei der Hinbewegung in die Abgabeposition ist die Bewegung in Querrichtung, die vorzugsweise eine Abwärtsbewegung ist, abgefedert durch die Druckfeder 42 und das Spiel, das das Ende des Mitnehmerarms 61 in dem Langloch 64 findet.

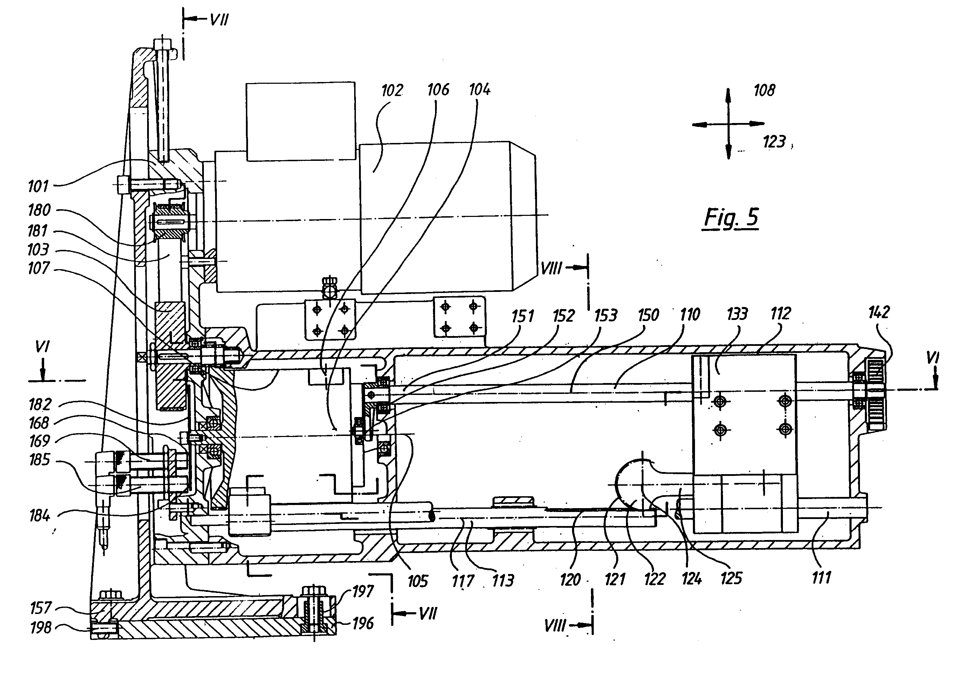

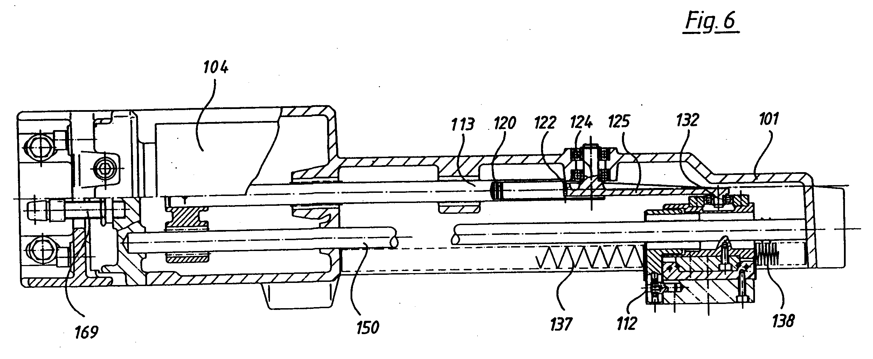

Bei dem zweiten in den Figuren 5 bis 8 dargestellten Ausführungsbeispiel sind Teile, die denen des ersten Ausführungsbeispiels entsprechen mit den gleichen Bezugsziffern wie im ersten Ausführungsbeispiel, jedoch vermehrt um 100, bezeichnet. Nachfolgend werden nur die Unterschiede des zweiten Ausführungsbeispiels gegenüber dem ersten Ausführungsbeispiel erläutert; im übrigen ist für das zweite Ausführungsbeispiel ebenso die Beschreibung des ersten Ausführungsbeispiels zu lesen.

Der Antriebsmotor 102 ist außen an das Gehäuse 101 angeflanscht. Er treibt über ein Zahnritzel 180, einen Zahnriemen 181 und das Zahnradgetriebe 103 die Kurventrommel 104. Das aus den Positionen 180, 181 und 103 gebildete Getriebe läßt sich leicht hinsichtlich der Übersetzung umstellen und schmierungsfrei ausgestalten.

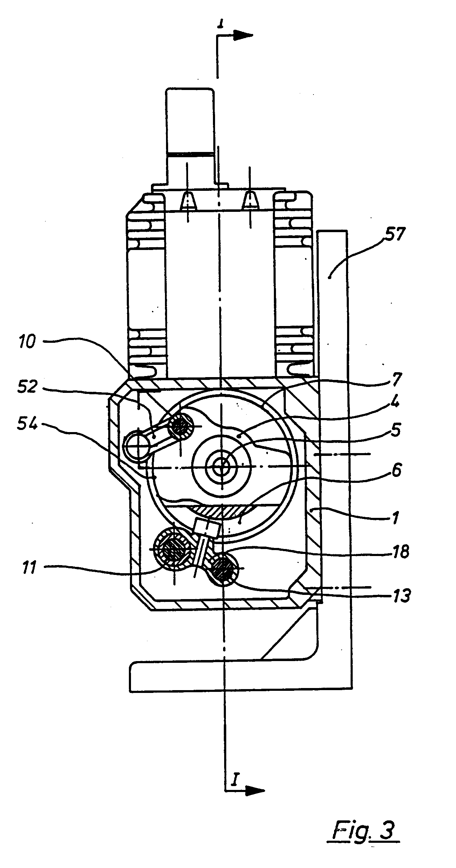

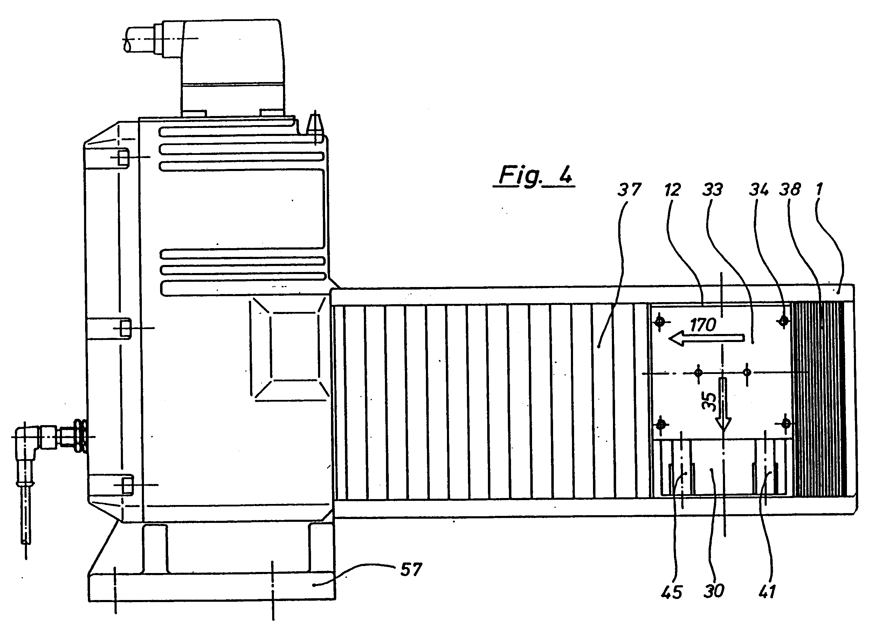

Koaxial zur Kurventrommel 104 ist drehsteif auf diese eine Steuerscheibe 182 aufgesteckt, die an ihrem Umfang Abfühlelemente 168, 184 in Form von Löchern, Markierungen oder dergleichen aufweist, die von berührungslosen Fühlern 169, 185 abfühlbar sind. Diese Fühler sind auf die Bahn der Abfühlelemente gerichtet und erzeugen jedesmal beim Vorbeilauf eines Abfühlelementes ein Signal. Die Ausgangssignale des Fühlers 169 steuern den Antriebsmotor 102 entsprechend wie im Text zu Figur 1 bis 4 erläutert an, während die Ausgangssignale des Fühlers 185 die Greifersteuerung ansteuern anstelle der bei dem ersten Ausführungsbeispiel vorgesehenen Endschalter 70 und 71, die bei dem zweiten Ausführungsbeispiel nicht vorgesehen sind.

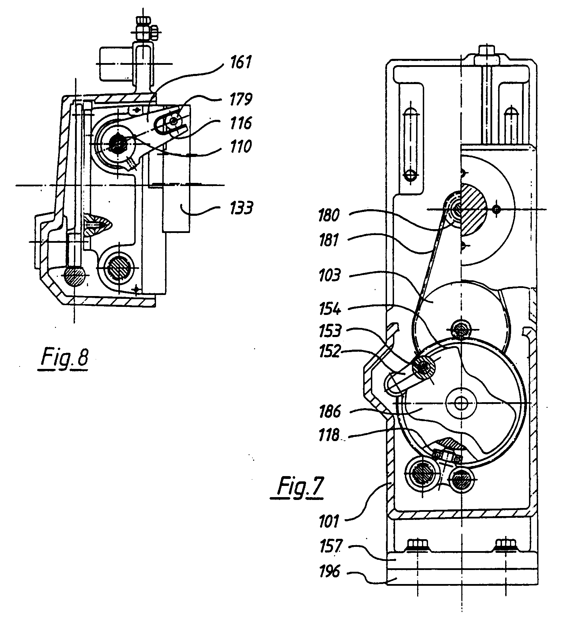

Die Steuerkurve 154 für das Kupplungsglied 153 ist wie auch besonders gut aus Figur 7 ersichtlich der Rand einer stirnseitigen Ausnehmung 186 in der Kurventrommel 104. Auf diesem Rand rollt das Kupplungsglied 153 und kann radial nach innen abgehoben werden gegen die Kraftwirkung einer Rückstellfeder 142, die am anderen freien Ende der drehbar gelagerten Führungsschiene 110 angreift und das Bestreben hat, diese so zu verdrehen, daß das Kupplungsglied auf der zweiten Steuerkurve 154 rollt. Die Wirkung ist die gleiche wie die der Rückstellfeder 42 in Verbindung mit dem Langloch 64 und dient zur Abfederung der Bewegung der Anschlagplatte 133 in Querrichtung auf die Abgabeposition zu, also bei diesem Ausführungsbeispiel nach unten.

Ein drehsteif aber längsverschieblich auf die Führungsschiene 110 gesteckter Mitnehmerarm 161 ist am freien Ende zu einer Gabel 116 geform, in die ein koaxial zur Führungsschiene 110 angeordneter Bolzen 179 spielfrei gleitend eingreif. Der Bolzen ist an der Anschlagplatte 133 gelagert, so daß sich die Anschlagplatte in Querrichtung in Abhängigkeit von der Drehbewegung der Führungsschiene 110 bewegt.

Die Standplatte 157, auf der das Gehäuse fest montiert ist, ist ihrerseits an einer Montageplatte 196 justierbar montiert. Die Montageplatte 196 ist an einem äußeren Lagerplatz festgeschraubt. Gegenüber dieser Montageplatte 196 ist die Standplatte 157 in zwei gekreuzten Richtungen justierbar montiert. Dazu dienen insgesamt vier an den Ecken eines Rechteckes verteilt auf der Montageplatte angeordnete Kreuznutensteine, wie der Kreuznutenstein 197, und zwei an aneinandergrenzenden Längsseiten angeordnete Justierschrauben, wie die Justierschraube 198.

## Patentansprüche

1. Vorrichtung zum Bewegen des Greifers eines Einlegers für Werkstücke in einer Führungsrichtung (8, 108) und in einer Querrichtung (23, 123) senkrecht dazu und zurück
mit einem Anschlagelement (33, 133) für den Greifer,
mit einem in Führungsrichtung und zurück auf stationären geraden Führungsschienen (10, 11; 110, 111) verschieblichen Schlitten (12, 112),
mit einer auf dem Schlitten angeordneten Geradführung (31) für das Anschlagelement, in der dieses in Querrichtung und zurück verschieblich ist,
mit einer von einem Motor (2, 102) rotierend antreibbaren, am Gehäuse (1, 101) gelagerten, mit zwei Steuerkurven (6, 54; 106, 154) ausgestatteten Kurventrommel (4, 104),
mit einem ersten Hebelgetriebe (13, 25; 113, 125), das mit der ersten Steuerkurve zusammenwirkt und den Schlitten entlang der Führungsschienen verschiebt, und
mit einem zweiten Hebelgetriebe (52, 61; 152, 161), das mit der zweiten Steuerkurve zusammenwirkt und das Anschlagelement entlang der Geradführung verschiebt, dadurch gekennzeichnet,
daß das erste Hebelgetriebe eine achsparallel zur Führungsrichtung sich erstreckende und in ihrer Längsrichtung verschiebliche gerade Zahnstange ( 13, 113 ) aufweist,
daß die Zahnstange antriebsseitig an die erste Steuerkurve gekuppelt ist,
daß die Zahnstange abtriebsseitig eine Verzahnung ( 20 , 120 ) aufweist,
daß ein mit seiner Achse ( 24, 124 ) senkrecht zur Führungsrichtung drehbar gelagertes Zahnsegment ( 22, 122 ) vorgesehen ist, dessen Verzahnung ( 21, 121 ) mit der Verzahnung der Zahnstange kämmt,
daß dieses Zahnsegment einen radial gerichteten Betätigungshebel ( 25, 125 ) aufweist,
daß der Betätigungshebel bei einer vollen Umdrehung der Kurventrommel von einer ersten Endstellung parallel zur Zahnstange und in eine erste Richtung weisend in eine zweite Stellung parallel zur Zahnstange aber in die zweite Richtung weisend und auf dem gleichen Wege zurück schwenkend antreibbar ist und
daß das freie Ende des Betätigungshebels an einen Schie ber ( 30, 130 ) angelenkt ist, der am Schlitten ( 12, 112 ) in einer vorzugsweise mit der Querrichtung zusammenfallenden Schieberrichtung, die sich senkrecht zur Führungsrichtung und senkrecht zur Achse des Zahnsegmentes erstreckt, und zurück verschieblich geführt ist.

2. Vorrichtung nach Anspruch 1, dadurch gekennzeichnet,
daß die Führungsrichtung sich im wesentlichen horizontal und die Querrichtung sich im wesentlichen vertikal erstreckt.

3. Vorrichtung nach Anspruch 1 und 2, dadurch gekennzeichnet,
daß die Kurventrommel ( 4, 104 ) achsparallel zur Führungsrichtung ( 8, 108 ) gelagert ist und
daß die erste Steuerkurve ( 6, 106 ) in die Mantelfläche ( 7, 107 ) der Kurventrommel eingearbeitet ist.

4. Vorrichtung nach einem oder mehreren der vorhergehenden Ansprüche, dadurch gekennzeichnet,
daß für den Schlitten ( 12, 112 ) zwei zur Führungsrichtung ( 8, 108 ) achsparallele Führungsschienen (10, 11; 110, 111) vorgesehen sind, von denen die eine Führungsschiene ( 10, 110 ) drehbar gelagert ist,
daß die drehbar gelagerte Führungsschiene über einen Hebel ( 52, 152 ) an die zweite Steuerkurve ( 54, 154 ) gekuppelt ist und bei einem vollen Umlauf der Kurventrommel ( 4, 104 ) zu einer Schwenkbewegung um ihre Längsachse ( 50, 150 ) um einen Winkelbereich, kleiner als 180^{o} und zurück angetrieben wird,
daß auf die drehbar gelagerte Führungsschiene längsverschieblich aber drehsteif ein radial gerichteter Mitnehmerarm ( 61, 161 ) gesteckt ist, der mit seinem freien Ende an das Anschlagelement ( 33, 133 ) gekuppelt ist und dieses bei Drehbewegung der drehbar gelagerten Führungsschiene in Querrichtung und zurück verschiebt.

5. Vorrichtung nach Anspruch 4, dadurch gekennzeichnet,
daß das freie Ende des Mitnehmerarms ( 61 ) mit Spiel in ein Langloch ( 64 ) des Anschlagelementes ( 33 ) eingreift, das sich längs der Querrichtung ( 23 ) erstreckt, und
daß eine Belastungsfeder ( 42 ) für das Anschlagelement vorgesehen ist, die sich am Schlitten ( 12 ) abstützt und das Bestreben hat, das Anschlagelement mit dem einen Ende des Langloches am Mitnehmerarm anliegend zu halten.

6. Vorrichtung nach Anspruch 4, dadurch gekennzeichnet,
daß die zweite Steuerkurve eine radial nach außen offene Umfangsbahn ist, von der das Kupplungsglied ( 154 ) gegen die Kraftwirkung einer Rückstellfeder ( 142 ) abhebbar ist,
daß der Mitnehmerarm ( 161 ) an seinem freien Ende eine Gabel ( 116 ) aufweist, in die ein koaxial zur Führungsschiene ( 110 ) angeordneter Bolzen ( 179 ) spielfrei gleitend eingreift,
daß der Bolzen am Anschlagelement ( 133 ) oder einem mit dem Anschlagelement in Querrichtung verschieblichen Element gelagert ist und
daß die Rückstellfeder in dem der Kurventrommel (104 ) abgekehrt liegenden Ende der Führungsschiene ( 110 ) angreift und unter Abstützung am Gehäuse ( 101 ) das Bestreben hat, diese Führungsschiene so zu drehen, daß das Kupplungsglied ( 153 ) mit der zweiten Steuerkurve ( 154 ) in Kontakt gehalten wird.

7. Vorrichtung nach einem der vorhergehenden Ansprüche, dadurch gekennzeichnet,
daß für das Anschlagelement ( 33 ) eine Aussparung ( 36 ) in einer Außenwand ( 35 ) eines Gehäuses ( 1 ) vorgesehen ist, die sich über die gesamte Bewegungsbahn des Schlittens ( 12 ) mit beidseitiger Zugabe (39, 40) erstreckt, und
daß beidseitig vom Schlitten die Aussparung durch je einen Faltenbalg (37, 38) abgeschlossen ist, der auf die jeweilige Zugabe zusammendrückbar ist.

8. Vorrichtung nach Anspruch 7, dadurch gekennzeichnet,
daß das Anschlagelement eine Anschlagplatte ( 33 ) ist, die sich planparallel zur Aussparung ( 36 ) erstreckt.

9. Vorrichtung nach einem der vorhergehenden Ansprüche, dadurch gekennzeichnet,
daß justierbar am Gehäuse ( 1 ) ein Pneumatikventil ( 70, 71 ) als Endschalter zur Betätigung des Greifers in der Bahn eines am Mitnehmerarm ( 61 ) befestigten zweiten Mitnehmerarms ( 62 ) und/oder in der Bewegungsbahn des Schlittens ( 12 ) angeordnet ist.

10. Vorrichtung nach einem der vorhergehenden Ansprüche, dadurch gekennzeichnet,
daß berührungslose Fühler (69, 169, 185) gegenüber der Umlaufbahn von mit der Kurverntrommel ( 4, 104 ) synchron umlaufenden Abfühlelementen ( 68, 168, 184 ) angeordnet sind, von denen ein Fühler ( 68, 168 ) dem Ende des durch einen vollen Umlauf der Kurventrommel definierten Zyklus zugeordnet ist und den Antriebsmotor ( 2, 102 ) abschaltet und ein gegebenenfalls vorgesehener zweiter Fühler ( 185 ) einer für die Betätigung des Greifers vorgesehenen Greifersteuerung zugeordnet ist.

## Claims

1. Device for moving the gripper of an inserter for workpieces in a guide direction (8, 108) and in a transverse direction (23, 123) at right angles thereto and back again, with a stop member (33, 133) for the gripper, with a slide (12, 112) displaceable on stationary, straight guide rails (10, 11; 110, 111) in the guide direction and hack again, with a guide bar (31) for the stop member arranged on the slide and in which said stop member is displaceable in the transverse direction and back again, with a cam drum (4, 104) driven in rotary manner by a motor (2, 102), mounted on the casing (1, 101) and equipped with two control cams (6, 54; 106, 154), with a first lever gear (13, 25; 113, 125), which cooperates with the first control cam and moves the slide along the guide rails and with a second lever gear (52, 61; 152, 161), which cooperates with the second control cam and moves the stop member along the guide bar, characterized in that the first lever gear has a straight rack (13, 113) extending axially parallel to the guide direction and displaceable in the longitudinal direction thereof, that the rack is coupled at the drive side to the first control cam, that the rack is provided on the driven side with a tooth system (20, 120), that a toothed segment (22, 122) mounted in rotary manner with its axis (24, 124) at right angles to the guide direction is provided and its tooth system (21, 121) meshes with the tooth system of the rack, that said toothed segment has a radially directed operating lever (25, 125), that the operating lever, in the case of a complete rotation of the cam drum, is pivotably drivable from a first end position parallel to the rack and pointing in a first direction in a second position parallel to the rack, but pointing in the second direction and back again over the same path and that the free end of the operating lever is articulated to a slider (30, 130), which is displaceably guided on the slide (12, 112) in a slider direction preferably coinciding with the transverse direction, which is perpendicular to the guide direction and at right angles to the toothed segment axis and back again.

2. Device according to claim 1, characterized in that the guide direction extends substantially horizontally and the transverse direction substantially vertically.

3. Device according to claim 1 and 2, characterized in that the cam drum (4, 104) is mounted axially parallel to the guide direction (8, 108) and that the first control cam (6, 106) is formed in the circumferential surface (7, 107) of the cam drum.

4. Device according to one or more of the preceding claims, characterized in that for the slide (12, 112) are provided two guide rails (10, 11, 110, 111) axially parallel to the guide direction (8, 108) and where of one guide rail (10, 110) is mounted in rotary manner, that the rotary mounted guide rail is coupled by means of a lever (52, 152) to the second control cam (54, 154) and during a complete rotation of the cam drum (4, 104) performs a pivoting movement about its longitudinal axis (50, 15) by an angular range smaller than 180° and back again and that on the rotary mounted guide rail is engaged in longitudinally displaceable, but torsionally stiff manner a radially directed driving arm (61, 161), whose free end is coupled to the stop member (33, 133) and moves the latter during the rotary movement of the rotary mounted guide rail in the transverse direction and back again.

5. Device according to claim 4, characterized in that the free end of the driving arm (61) engages with clearance in an elongated hole (64) of the stop member (33), which extends along the transverse direction (23) and that a loading spring (42) is provided for the stop member, which is supported on the slide (12) and attempts to keep the stop member with one end of the elongated hole in engagement on the driving arm.

6. Device according to claim 4, characterized in that the second control cam is a radially outwardly open circumferential path, from which the coupling member (154) can be raised against the action of a return spring (142), that the driving arm (161) is provided at its free end with a fork (116), in which engages in sliding, clearance-free manner a bolt (179) coaxial to the guide rail (110), that the bolt is mounted on the stop member (133) or an element displaceable transversely with the stop member and that the return spring engages in the end of the guide rail (110) remote from the cam drum (104) and, whilst supported on the casing (101), attempts to rotate said guide rail in such a way that the coupling member (153) is kept in contact with the second control cam (154).

7. Device according to one of the preceding claims, characterized in that for the stop member (33) is provided a recess (36) in one outer wall (35) of a casing (1) and which extends over the entire movement path of the slide (2) with an allowance (39, 40) on both sides and that on both sides of the slide the recess is in each case terminated by a bellows (37, 38), which is compressable to the allowance.

8. Device according to claim 7, characterized in that the stop member is a stop plate (33), which extends plane-parallel to the recess (36).

9. Device according to one of the preceding claims, characterized in that on the casing (1) is adjustably provided a pneumatic valve (70, 71) as a limit switch for operating the gripper in the path of a second driving arm (62) fixed to the driving arm (61) and/or in the movement path of the slide (12).

10. Device according to one of the preceding claims, characterized in that contactless sensors (69, 169, 185) are arranged facing the rotational path of sensing elements (68, 168, 184) rotating synchronously with the cam drum (4, 104) and whereof one sensor (68, 168) is associated with the end of the cycle defined by a complete rotation of the cam drum and switches off the drive motor (2, 102) and an optionally provided second sensor (185) is associated with a gripper control provided for the operation of the gripper.

## Revendications

1. Dispositif pour déplacer la pince d'un chargeur pour pièces à usiner dans un sens de guidage (8, 108) et dans un sens transversal (23, 123) perpendiculaire à ce dernier, et la faire revenir dans la position initiale, comprenant un élément d'arrêt (33, 133) pour la pince, un chariot (12, 112) pouvant se déplacer sur des glissières de guidage (10, 11; 110, 111) rectilignes et fixes dans le sens de guidage et revenir dans sa position initiale, une glissière rectiligne (31) pour l'élément d'arrêt disposée sur le chariot, dans laquelle l'élément d'arrêt peut se déplacer transversalement et revenir dans sa position initiale, une came cylindrique (4, 104) munie de deux cames de commande (6, 54; 106, 154) et montée sur le carter (1, 101) pouvant être entraînée de manière rotative par un moteur (2, 102), un premier mécanisme à levier (13, 25; 113, 125) qui coopère avec la première came de commande et qui déplace le chariot le long des glissières de guidage et un second mécanisme à levier (52, 61; 152, 161) qui coopère avec la seconde came de commande et qui déplace l'élément d'arrêt le long de la glissière rectiligne, caractérisé en ce que le premier mécanisme à levier présente une barre dentée (13, 113) rectiligne qui s'étend parallèlement à l'axe du sens de guidage et qui peut être déplacée longitudinalement, en ce que la barre dentée est couplée à la première came de commande du côté entraînant, en ce que la barre dentée présente une denture (20, 120) du côté entraîné, en ce qu'un segment denté (22, 122) monté de manière rotative et dont l'axe (24, 124) est perpendiculaire au sens de guidage est prévu. segment denté dont la denture (21, 121) s'engrène avec la denture de la barre dentée, en ce que ce segment denté présente un levier de manoeuvre (25, 125) orienté radialement, en ce que, lors d'une rotation complète de la came cylindrique, le levier de manoeuvre peut être actionné de manière pivotante d'une première position terminale parallèle à la barre dentée et orientée dans une première direction dans une seconde position parallèle à la barre dentée mais orientée dans la seconde direction et revenir de la même manière dans sa position initiale, et en ce que l'extrémité libre du levier de manoeuvre est montée de manière articulée sur un coulisseau (30, 130) qui se déplace sur le chariot (12, 112) dans un sens de déplacement coïncidant, de préférence, avec le sens transversal et s'étendant perpendiculairement au sens de guidage et à l'axe du segment denté, et revient dans sa position initiale.

2. Dispositif selon la revendication 1, caractérisé en ce que le sens de guidage est généralement horizontal et le sens transversal, généralement vertical.

3. Dispositif selon la revendication 1 et 2, caractérisé en ce que la came cylindrique (4, 104) est montée parallèlement à l'axe du sens de guidage (8, 108) et en ce que la première came de commande (6, 106) est logée dans la surface de l'enveloppe (7, 107) de la came cylindrique.

4. Dispositif selon l'une ou plusieurs revendications précédentes, caractérisé en ce que deux glissières de guidage (10, 11; 110, 111) parallèles à l'axe du sens de guidage (8, 108) sont prévues pour le chariot (12, 112), dont l'une (10, 110) est montée de manière rotative, en ce que la glissière de guidage montée de manière rotative est couplée à la seconde came de commande (54, 154) par l'intermédiaire d'un levier (52, 152) et, lors d'une rotation complète de la came cylindrique (4, 104) est actionnée avec un mouvement pivotant autour de son axe longitudinal (50, 150) dans une zone d'angle inférieure à 180° et revient dans sa position initiale, et en ce qu'un bras d'entraînement (61, 161) orienté radialement, qui peut être déplacé longitudinalement mais qui est fixe en rotation est monté sur la glissière de guidage rotative, est couplé avec son extrémité libre à l'élément d'arrêt (33, 133) et déplace transversalement ce dernier lorsque la glissière de guidage montée de manière rotative tourne, puis le fait revenir dans sa position initiale.

5. Dispositif selon la revendication 4, caractérisé en ce que l'extrémité libre du bras d'entraînement (61) s'encastre avec jeu dans un trou oblong (64) de l'élément d'arrêt (33) qui s'étend le long de la direction transversale (23), et en ce qu'un ressort de charge (42) est prévu pour l'élément d'arrêt, ressort qui prend appui sur le chariot (12) et qui tend à maintenir l'élément d'arrêt avec l'une des extrémités du trou oblong contre le bras d'entraînement.

6. Dispositif selon la revendication 4, caractérisé en ce que la seconde came de commande est une glissière périphérique ouverte radialement vers l'extérieur, de laquelle l'organe de couplage (154) peut être retiré contre l'action d'un ressort de rappel (142), en ce que le bras d'entraînement (161) présente, à son extrémité libre, une fourche (116) dans laquelle vient se glisser sans jeu un boulon (179) disposé de manière coaxiale par rapport à la glissière de guidage (110), en ce que le boulon est monté sur l'élément d'arrêt (133) ou sur un élément pouvant se déplacer transversalement avec l'élément d'arrêt, et en ce que le ressort de rappel touche l'extrémité de la glissière de guidage (110) située à l'opposé de la came cylindrique (104) et tend, en prenant appui sur le carter (101), à faire tourner cette glissière de guidage de telle manière, que l'organe de couplage (153) est maintenu en contact avec la seconde came de commande (154).

7. Dispositif selon l'une des revendications précédentes, caractérisé en ce qu'un évidement (36) s'étendant sur tout le parcours du chariot (12) et comportant une partie supplémentaire (39, 40) est prévu pour l'élément d'arrêt (33) dans une paroi extérieure (35) d'un carter (1), et en ce que l'évidement est fermé de chaque côté du chariot par un soufflet (37, 38) qui peut être comprimé sur chacune des parties supplémentaires.

8. Dispositif selon la revendication 7, caractérisé en ce que l'élément d'arrêt est une plaque d'arrêt (33) qui s'étend parallèlement au plan de l'évidement (36).

9. Dispositif selon l'une des revendications précédentes, caractérisé en ce qu'un relais pneumatique (70, 71) pouvant être ajusté au carter (1) et faisant fonction d'interrupteur de fin de course est disposé, pour actionner la pince, dans la glissière d'un second bras d'entraînement (62) fixé sur le bras d'entraînement (61) et / ou sur le parcours du chariot (12).

10. Dispositif selon l'une des revendications précédentes, caractérisé en ce que des capteurs (69, 169, 185) sans contact sont disposés en face de la trajectoire d'éléments de palpage (68, 168, 184) tournant de manière synchronisée avec la came cylindrique (4, 104), capteurs dont l'un (69, 169) est associé à la fin du cycle défini par une rotation complète de la came de commande et coupe le moteur de commande (2, 102) et dont un second capteur (185), prévu le cas échéant, est associé à un dispositif de commande de la pince prévu pour actionner la pince.
